(19) Europäisches Patentamt
European Patent Office
Office européen des brevets

(11) **EP 3 306 465 B1**

(12) **FASCICULE DE BREVET EUROPEEN**

(45) Date de publication et mention
de la délivrance du brevet:
**01.05.2019 Bulletin 2019/18**

(51) Int Cl.:
**G06F 7/72** (2006.01)  **H04L 9/00** (2006.01)
**H04L 9/30** (2006.01)

(21) Numéro de dépôt: **17195112.2**

(22) Date de dépôt: **06.10.2017**

(54) **PROCÉDÉ DE TRAITEMENT CRYPTOGRAPHIQUE COMPRENANT UNE MULTIPLICATION D'UN POINT D'UNE COURBE ELLIPTIQUE PAR UN SCALAIRE**

KRYPTOGRAFISCHES BEHANDLUNGSVERFAHREN, DAS EINE MULTIPLIKATION EINES PUNKTS EINER ELLIPTISCHEN KURVE DURCH EINEN SKALAR UMFASST

CRYPTOGRAPHIC PROCESSING METHOD COMPRISING A MULTIPLICATION OF A POINT OF AN ELLIPTIC CURVE BY A SCALAR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.10.2016 FR 1659677**

(43) Date de publication de la demande:
**11.04.2018 Bulletin 2018/15**

(73) Titulaire: **Idemia Identity & Security France
92400 Courbevoie (FR)**

(72) Inventeurs:
 • **SERVANT, Victor
 92130 Issy Les Moulineaux (FR)**
 • **DABOSVILLE, Guillaume
 92130 Issy Les Moulineaux (FR)**

(74) Mandataire: **Regimbeau
20, rue de Chazelles
75847 Paris Cedex 17 (FR)**

(56) Documents cités:
**WO-A1-2015/121324     FR-A1- 3 033 965**

• E Karthikeyan: "Survey of Elliptic Curve Scalar Multiplication Algorithms", International Journal of Advanced Networking and Applications, 1 septembre 2012 (2012-09-01), pages 1581-1590, XP055357038, Extrait de l'Internet: URL:http://www.ijana.in/papers/V4I2-8.pdf
• MATTHIEU RIVAIN: "Fast and Regular Algorithms for Scalar Multiplication over Elliptic Curves", INTERNATIONAL ASSOCIATION FOR CRYPTOLOGIC RESEARCH,, vol. 20110817:153319, 17 août 2011 (2011-08-17), pages 1-25, XP061005177,
• MOELLER ET AL: "SECURING ELLIPTIC CURVE POINT MULTIPLICATION AGAINST SIDE-CHANNEL ATTACKS", INFORMATION SECURITY. INTERNATIONAL CONFERENCE: PROCEEDINGS ISC, XX, XX, 1 octobre 2001 (2001-10-01), pages 324-334, XP001068194,

EP 3 306 465 B1

**Description**

**DOMAINE DE L'INVENTION**

La présente invention concerne un procédé de traitement cryptographique comprenant une multiplication d'un point d'une courbe elliptique sur un corps de Galois par un scalaire.

**ETAT DE LA TECHNIQUE**

De nombreux traitements cryptographiques mis en oeuvre dans des puces électroniques comprennent des multiplications de points de courbes elliptiques sur un corps de Galois par un scalaire.

De telles multiplications sont avantageusement implémentées au moyen d'algorithmes utilisant deux fonctions de base : une fonction de doublement d'un point de courbe elliptique, et une fonction d'addition de deux points de courbes elliptiques. De tels algorithmes sont appelés « double-et-ajoute » (« double-and-add » en anglais).

Une implémentation classique d'un algorithme de multiplication d'un point de courbe elliptique par un scalaire du type « double-et-ajoute » est illustrée par le pseudo-code en **annexe 1**, à la fin de la présente description. Cette implémentation se présente sous la forme d'une fonction R2L_DoubleAndAdd prenant en paramètre le point P et le scalaire k et retournant le résultat de la multiplication de k par P. Cette fonction utilise deux registres mémoire R0 et R1 et fait appel aux deux fonctions de base précitées de doublement (identifiée par la ligne de code de la forme x=2*x) et d'addition (identifiée ci-dessus par le symbole +). Cette implémentation utilise une boucle, chaque itération de la boucle traitant un des bits du scalaire k.

Considérons par exemple le scalaire k=7. La représentation binaire non-signée de k est $(111)_2$.

L'algorithme ci-dessus sollicite les deux fonctions de base et de doublement de la manière suivante pour calculer le point 7P :

$$0 + (k\&1)P + ((k \gg 1)\&1)2P + ((k \gg 2)\&1)4P = 0 + P + 2P + 4P$$

Considérons à présent un deuxième scalaire k=485, ayant pour représentation binaire non-signée $(111100101)_2$.

Notons « A » un appel à la fonction d'addition et « B » un appel à la fonction de doublement.

Pour calculer le point kP, l'algorithme ci-dessus utilise la séquence d'appels suivants:

*DADDADDDADADADA*

Durant une exécution de la fonction R2L_DoubleAndAdd par un dispositif cryptographique tel qu'une carte à puce, on peut observer la consommation électrique du dispositif. Sans mesures particulière de sécurisation de l'implémentation de cette fonction, on peut facilement distinguer un appel D à la fonction de doublement d'un appel A à la fonction d'addition. En observant tout particulièrement l'ordre dans lequel ces appels A et B apparaissent dans la séquence d'appels mise en oeuvre par la fonction, un tiers pourrait retrouver la valeur du scalaire k.

Or, pour de nombreux traitements cryptographiques tel que le chiffrement ECC, un tel scalaire doit rester secret ; il ne faut donc pas pouvoir lire en une fois (au moins) sa valeur pendant l'exécution de tels traitements par un dispositif électronique.

Pour atteindre cet objectif, d'autres algorithmes de type « double-et-ajoute », comprenant des mesures de sécurisation, ont été proposés. L'un d'entre eux est par exemple décrit dans le document WO 2014/111647 et comprend les étapes suivantes :

- mémorisation dans un premier registre d'un point nul d'un corps de Galois,
- mise en oeuvre d'une boucle comprenant au moins une itération, une itération de la boucle comprenant des étapes de :

  ◦ sélection d'une fenêtre de *w* bits dans la représentation binaire non-signée du scalaire *k,*
  ◦ calcul au moyen d'une fonction de doublement et mémorisation dans *w* deuxièmes registres de points multiples de P, chaque point multiple étant associé à un bit de la fenêtre et étant de la forme $2^i P$ où *i* est un entier,
  ◦ ajout ou non dans le premier registre de points multiples mémorisés dans les deuxièmes registre au moyen d'une fonction d'addition, chaque point multiple étant ajouté ou non dans le premier registre ou non en fonction de la valeur du bit de la fenêtre auquel le point multiple est associé,

dans lequel la boucle prend fin une fois que chaque bit de la représentation binaire non-signée du scalaire *k* a été sélectionné dans une itération,
- après la fin de la boucle, fourniture d'une valeur mémorisée dans le premier registre.

Chaque itération de la boucle traite une fenêtre de *w* bits de la représentation binaire non-signée du scalaire k. Les *w* deuxièmes registres servent à mémoriser temporairement des points multiples de la forme $2^iP$ (c'est-à-dire 2P, 4P, 8P, 16P, ...). Sont ajoutés au contenu du premier registre les points multiples correspondant à des bits de la représentation binaire de la fenêtre qui sont égaux à 1.

La séquence d'appels générés pour traiter le scalaire de représentation binaire non signée $(111100101)_2$ est alors la suivante, pour *w* = 3:

DDD AA DDD A DDD AAA

L'observation de cette séquence d'appels permet certes de déterminer combien il y a de '1' dans chaque fenêtre, mais masque leur emplacement dans la séquence. Pour retrouver le scalaire k complet, il faut donc effectuer une recherche exhaustive avec cette unique information. Le nombre *NBP* de possibilités à tester par le tiers observateur s'exprime comme le produit des coefficients binomiaux x parmi n du nombre de '1' par fenêtre, sur la taille de la fenêtre w, pour toutes les fenêtres du scalaire k. Pour le scalaire k=485, on a

$$NBP = C_3^2 . C_3^1 . C_3^3$$

L'algorithme présenté dans le document WO 2014/111647 permet en définitive de s'assurer qu'on ne peut pas retrouver le scalaire k en une seule lecture, sans pour autant affecter le temps d'exécution (i.e. le nombre d'appels D et A).

Toutefois, cet algorithme n'est qu'imparfaitement protégé : en effet, lorsqu'une fenêtre ne comporte que des bits égaux à 1 ou que des bits égaux à zéro, il n'y a aucune incertitude sur la position des bits à '1' sur la fenêtre en question. Par conséquent, l'effort nécessaire pour retrouver le scalaire k par observation de signaux est réduit.

Par exemple, un tel cas se produit lorsque cet algorithme traite le scalaire k=485 : au cours de la troisième itération est sélectionnée la fenêtre '111'. Ceci réduit la valeur *NBP* puisque le troisième terme $C_3^3$ ne vaut que 1.

On connait par ailleurs de l'état de la technique la méthode dite de Moreno-Hasan. Cette méthode, initialement présentée dans le document « SPA-Resistant Binary Exponentiation with optimal Execution Time », par C. Moreno et M. Anwar Hasan et publié en 2011, a été reprise dans les documents US2014177827, US2014177824.

Le procédé de Moreno-Hasan propose d'accumuler les résultats intermédiaires de doublements dans un buffer temporaire. Le scalaire est au préalable complètement encodé en une forme non-adjacente (NAF). L'algorithme calcule à quelle fréquence les additions doivent être effectuées de façon à ce qu'elles n'indiquent aucune information sur la position des bits du scalaire encodé. L'observation montre donc un motif régulier répété plusieurs fois.

Un inconvénient majeur de cette méthode de Moreno-Hasan est que la taille du buffer temporaire n'est pas connue a priori, mais simplement bornée. Pour une implémentation embarquée dans un dispositif cryptographique de mémoire limitée, ces conditions sont difficilement gérables. Un exemple donné par l'article de Moreno et Hasan est que pour des scalaire ayant 256 bits, un buffer de taille 64 points 'suffirait'. Or, de nombreux dispositifs cryptographiques (typiquement des cartes à puces) ne peuvent s'accommoder d'autant d'espace mémoire.

**EXPOSE DE L'INVENTION**

Un but de l'invention est par conséquent de proposer un procédé de traitement cryptographique comprenant une multiplication d'un point de courbe elliptique par un scalaire qui est plus efficacement protégé contre des attaques par observations de signaux, sans pour autant compromettre les performances ni la consommation mémoire du dispositif qui l'exécute.

Il est dès lors proposé, selon un premier aspect de l'invention, un procédé de traitement cryptographique mis en oeuvre par au moins un processeur, le procédé comprenant une multiplication d'un point *P* d'une courbe elliptique sur un corps de Galois par un scalaire *k,* la multiplication comprenant des étapes de :

- mémorisation dans un premier registre d'un point nul du corps de Galois,
- mise en oeuvre d'une boucle comprenant au moins une itération, une itération de la boucle comprenant des étapes de :

  ○ sélection d'une fenêtre de *w* bits dans la représentation binaire non-signée du scalaire *k, w* étant un entier prédéterminé indépendant du scalaire *k* et strictement supérieur à 1,
  ○ calcul au moyen d'une fonction de doublement et mémorisation dans au plus *w* deuxièmes registres de points multiples de P, chaque point multiple étant associé à un bit de la fenêtre et étant de la forme $\pm 2^i P$ où $i$ est un entier,
 ∘ ajout ou non dans le premier registre de points multiples mémorisés dans les deuxièmes registre au moyen d'une fonction d'addition, chaque point multiple étant ajouté ou non dans le premier registre ou non en fonction de la valeur du bit de la fenêtre auquel le point multiple est associé,

dans lequel la boucle prend fin une fois que chaque bit de la représentation binaire non-signée du scalaire $k$ a été sélectionné dans une itération,
• après la fin de la boucle, fourniture d'une valeur mémorisée dans le premier registre,

dans lequel :

• si tous les bits de la fenêtre sélectionnée au cours d'une itération de la boucle sont nuls, l'itération comprend au moins une exécution factice de la fonction d'addition, et/ou
• si tous les bits de la fenêtre sélectionnée au cours d'une itération de la boucle sont non nuls, les points multiples à ajouter dans le premier registre au cours de l'étape sont déterminés d'après une forme non-adjacente associée à la fenêtre.

L'incorporation d'au moins une exécution factice de la fonction d'addition mise en oeuvre dans le cas où une fenêtre ne comporte que des bits nuls permet d'augmenter le nombre $NBP$ de possibilités à tester pour retrouver le scalaire k par observation de signaux.
Comme cela sera plus détaillé plus amplement dans la suite, le passage par la forme non-adjacente dans le cas d'une fenêtre ne comportant que des bits non-nuls procure également le même effet.
En outre, la taille w de la fenêtre étant prédéterminée, la consommation mémoire du procédée est limitée.
Le procédé peut également comprendre les caractéristiques optionnelles suivantes prises seules ou en combinaison lorsque cela est techniquement possible.
Pour chaque itération de la boucle, on peut avoir $n + m \geq 1$, où $n$ est le nombre d'exécutions factices éventuelles de la fonction d'addition au cours de l'itération, et $m$ est le nombre d'exécutions éventuelles de la fonction d'addition au cours de l'étape d'ajout de l'itération.
La valeur $n + m$ peut êtr identique pour plusieurs itérations de la boucle, voire pour toutes les itérations de la boucle.
Les fenêtres peuvent être sélectionnées selon un ordre de lecture de la représentation binaire du scalaire $k$ allant de la droite vers la gauche.
Si plusieurs bits de la fenêtre sélectionnée au cours d'une itération de la boucle sont non nuls, alors les ajouts de multiples dans le premier registre peuvent être mis en oeuvre au cours de l'itération dans un ordre aléatoire.
Si tous les bits de la fenêtre sélectionnée au cours d'une itération de la boucle sont non nuls, un point multiple de valeur négative associé au bit de poids le plus faible de ladite forme non-adjacente peut être ajouté dans le premier registre au cours de l'itération.
Si tous les bits de la fenêtre sélectionnée au cours d'une itération de la boucle sont non nuls, un point multiple associé au bit de poids le plus fort de ladite forme non-adjacente peut être ajouté dans le premier registre dans une itération ultérieure ou après la fin de la boucle.
Si tous les bits de la fenêtre sélectionnée au cours de la q-ième itération de la boucle sont non nuls, un point multiple de valeur $2^{qw}P$ peut être ajouté dans le premier registre au cours de la q-ième itération.
Selon un deuxième aspect de l'invention, il est proposé en outre un produit programme d'ordinateur comprenant des instructions de code de programme pour l'exécution des étapes du procédé selon le premier aspect de l'invention, lorsque ce procédé est exécuté par au moins un processeur.
Selon un troisième aspect de l'invention, il est proposé en outre un dispositif de traitement cryptographique comprenant

 ∘ au moins un processeur configuré pour multiplier un point $P$ d'une courbe elliptique sur un corps de Galois par un scalaire $k,$
 ∘ au moins une mémoire comprenant un premier registre et $w$ deuxièmes registres, dans lequel la multiplication comprenant des étapes de :

• mémorisation dans le premier registre d'un point nul du corps de Galois,
• mise en oeuvre d'une boucle comprenant au moins une itération, une itération de la boucle comprenant des étapes de :

 ∘ sélection d'une fenêtre de $w$ bits dans la représentation binaire non-signée du scalaire $k,$ $w$ étant un entier prédéterminé indépendant du scalaire *k* et strictement supérieur à 1,

∘ calcul, au moyen d'une fonction de doublement, et mémorisation, dans au plus *w* des deuxièmes registres, de points multiples de P, chaque point multiple étant associé à un bit de la fenêtre et étant de la forme $\pm 2^i P$ où *i* est un entier,

∘ ajout ou non dans le premier registre de points multiples mémorisés dans les deuxièmes registre au moyen d'une fonction d'addition, chaque point multiple étant ajouté ou non dans le premier registre ou non en fonction de la valeur du bit de la fenêtre auquel le point multiple est associé,

dans lequel la boucle prend fin une fois que chaque bit de la représentation binaire non-signée du scalaire *k* a été sélectionné dans une itération,

• après la fin de la boucle, fourniture d'une valeur mémorisée dans le premier registre,

dans lequel le processeur est configuré en outre de sorte que :

• si tous les bits de la fenêtre sélectionnée au cours d'une itération de la boucle sont nuls, l'itération comprend au moins une exécution factice de la fonction d'addition, et/ou

• si tous les bits de la fenêtre sélectionnée au cours d'une itération de la boucle sont non nuls, les points multiples à ajouter dans le premier registre au cours de l'étape sont déterminés d'après une forme non-adjacente associée à la fenêtre.

Selon un quatrième aspect de l'invention, il est proposé une carte à puce comprenant un dispositif de traitement cryptographique selon le troisième aspect de l'invention.

## DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :

• La figure 1 représente de façon schématique un dispositif cryptographique.
• La figure 2 est un organigramme d'étapes d'un procédé de traitement cryptographique selon un mode de réalisation de l'invention.

Sur l'ensemble des figures, les éléments similaires portent des références identiques.

## DESCRIPTION DETAILLEE DE L'INVENTION

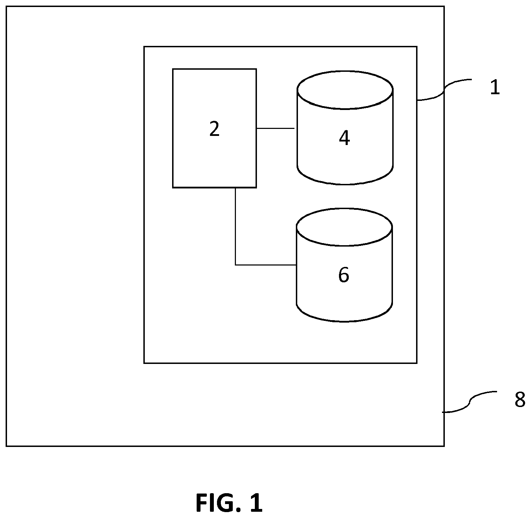

En référence à la **figure 1,** un dispositif cryptographique 1 comprend au moins un processeur 2 et au moins une mémoire 4, 6.

Le processeur 2 est configuré pour exécuter un programme cryptographique.

Le programme cryptographique comprend des instructions de code de programme pour l'exécution des étapes d'un procédé de traitement cryptographique comprenant au moins une multiplication d'un point P d'une courbe elliptique sur un corps de Galois prédéterminé par un scalaire k.

Le programme cryptographique est par exemple un programme de chiffrement ECC (sigle pour « elliptic curve cryptography »).

Les instructions de code de programme pour mettre en oeuvre ladite multiplication se présentent par exemple sous forme d'une fonction dédiée.

La mémoire comprend une mémoire volatile 4 et une mémoire non-volatile 6. La mémoire volatile est par exemple de type RAM.

La mémoire non-volatile 6 est par exemple de type HDD, SSD, Flash, EEPROM, etc.

La mémoire volatile 4 comprend une pluralité de registres susceptibles d'être utilisés par le processeur 2 pour stocker des données temporaires au cours de la mise en oeuvre du programme.

La mémoire non-volatile 6 mémorise de manière persistante le programme cryptographique.

La mémoire non-volatile 6 mémorise par ailleurs deux fonctions de base : une fonction de doublement d'un point P de courbe elliptique (c'est-à-dire une fonction calculant le point 2P), et une fonction d'addition de points de courbes elliptiques. Ces deux fonctions sont connues de l'homme du métier.

En particulier, la fonction d'addition est signée, dans le sens où cette fonction est apte à manipuler l'opposé -P d'un point P d'une courbe elliptique, point qui est très facile à calculer (contrairement par exemple au calcul d'un inverse de point de courbe elliptique dans le cadre d'un calcul d'exponentiation modulaire).

Les deux fonctions de base d'addition et de doublement peuvent être intégrée de manière statique au programme cryptographique ou bien faire partie d'une librairie dynamique utilisée par le programme cryptographique au moment de son exécution par le processeur 2.

Le dispositif cryptographique 1 peut être intégré dans une carte à puce 8, ou être lui-même une carte à puce.

*Rappels généraux concernant diverses représentations binaires d'un scalaire*

Il existe non pas une seule mais plusieurs représentations binaires possibles d'un scalaire k. Dans la suite, différentes représentations binaires d'un même scalaire sont dites « associées ».

La représentation binaire non-signée d'un scalaire est la plus couramment utilisée : cette représentation n'utilise que les symboles 0 et 1.

Il existe cependant d'autres représentations binaires d'un scalaire k, qui sont quant à elles signées, c'est-à-dire utilisant les symboles 0, 1 et -1.

De façon connue en elle-même, la forme non-adjacente (« non-adjacent form » en anglais, abrégé en NAF) de k est une représentation binaire signée particulière et unique d'un scalaire.

En particulier, il est à noter que la NAF d'un scalaire k dont la représentation binaire non-signée est constituée de w bits égaux à 1 comprend les w+1 bits signés suivants:

- un bit de poids le plus faible égal à -1,
- w-1 bits de poids intermédiaires nuls,
- un bit de poids le plus fort égal à 1.

Par exemple, la représentation binaire non-signée du nombre k=7 est $(111)_2$, ou plus simplement '111'. La forme NAF de ce nombre est $(1\ 0\ 0\ -1)_2 = 8 - 1 = 7$.

*Procédé de multiplication du point P par un scalaire k*

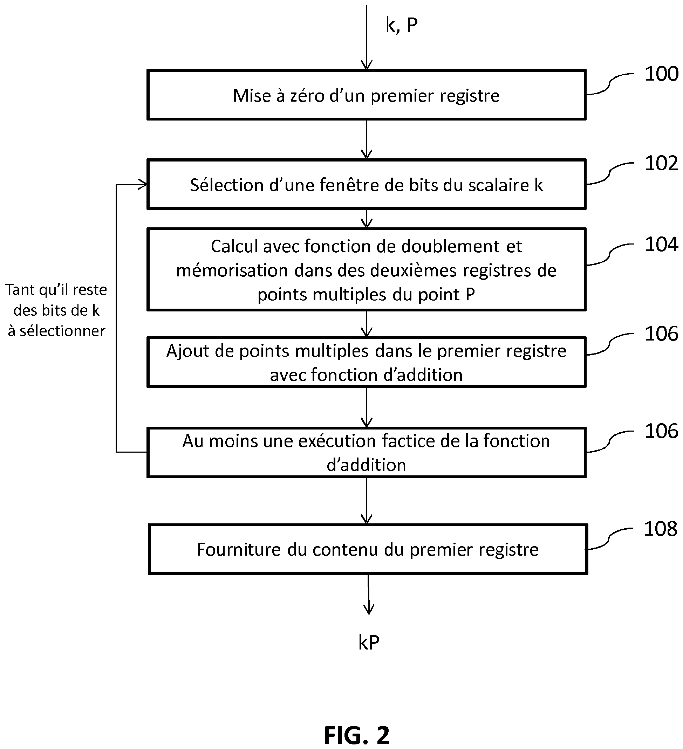

Est ci-après décrit un procédé de multiplication d'un point P par un scalaire k mis en oeuvre par le processeur 2 en relation avec la **figure 2.**

Le processeur 2 mémorise 100 dans un premier registre un point nul du corps de Galois.

Le processeur 2 met en oeuvre une boucle comportant une ou plusieurs itérations.

Dans une première itération de la boucle, le processeur 2 sélectionne 102 une fenêtre des *w* premiers bits dans la représentation binaire non-signée du scalaire *k* (c'est-à-dire ceux étant de poids les plus faibles dans la représentation binaire non-signée de k). L'entier *w* est prédéterminé, indépendant du scalaire *k* et strictement supérieur à 1.

Le processeur 2 calcule 104, au moyen de la fonction de doublement, au plus *w* points multiples. Chaque point multiple est associé à un bit de la fenêtre sélectionnée et est de la forme $+2^i P$ où *i* est un entier.

Les points multiples calculés dans la première itération font partie de l'ensemble de points suivants :

$$2^0 P, 2^1 P, ..., 2^{w-1} P$$

Tout ou partie de ces *w* points multiples sont mémorisés dans au plus *w* deuxièmes registres différents du premier registre.

Dans une étape 106, le processeur 2 ajoute ou non dans le premier registre des points multiples mémorisés dans les *w* deuxièmes registres au moyen d'une fonction d'addition. Chaque point multiple est ajouté ou non dans le premier registre ou non en fonction de la valeur du bit de la fenêtre auquel le point multiple est associé.

Si au moins un des bits de la fenêtre est égal à zéro et si au moins un autre des bits de la fenêtre est égal à un, les points multiples qui sont ajouté dans le premier registre sont ceux associés à des bits non-nuls de la fenêtre.

Dans le cas particulier où tous les bits de la fenêtre sont nuls, aucun point multiple n'est donc ajouté dans le premier registre.

Si l'on appliquait la logique qui précède au cas où tous les bits de la fenêtre sont non nuls, alors les w points multiples de l'ensemble qui précède devraient être ajoutés dans le premier registre. Toutefois, un tel traitement n'est pas mis en oeuvre. On verra dans la suite qu'un traitement différent est mis en oeuvre au cours du procédé proposé.

Bien que cela soit possible et même préférable à fins de protection contre des fuites d'informations, il n'est pas absolument nécessaire de mémoriser tous les points multiples de l'ensemble de points multiples $\{2^0 P, 2^1 P, ..., 2^{w-1} P\}$ dans une même itération. Il peut être par exemple envisagé que seuls les points multiples à ajouter dans le premier registre fasse l'objet d'une mémorisation dans un deuxième registre. Par exemple, si un seul des bits de la fenêtre est non nul, un seul point multiple de la forme $\pm 2^i P$ sera ajouté dans le premier registre ; il est donc possible de n'utiliser qu'un seul des w registres pour mémoriser ce point multiple.

Les additions de points multiples dans le premier registre, quand il y en a plusieurs, sont mises en oeuvre dans un ordre aléatoire. Ceci rend plus difficile la détermination du scalaire k par observation des appels à la fonction d'addition et de doublement. Par exemple, il peut être fait appel à une fonction de permutation définissant un ordre aléatoire d'addition des points multiples pertinents.

La première itération de la boucle est alors terminée.

Tant qu'il reste au moins un bit de la représentation binaire non-signée du scalaire k qui n'a pas été sélectionné dans une fenêtre, les étapes qui précèdent sont mises en oeuvre dans une nouvelle itération.

Dans la dernière itération, le nombre de bits restant à traiter peut être inférieur à w ; dans ce cas, la fenêtre est complétée à gauche par des zéros.

Dans l'étape 102 mise en oeuvre au cours d'une itération n'étant pas la première itération de la boucle, sont sélectionnés les w bits se trouvant, dans la représentation binaire non-signée du scalaire k, immédiatement à gauche de la fenêtre sélectionnée dans l'itération précédente. En d'autres termes, les fenêtres sont sélectionnées dans la boucle selon un ordre de lecture de la représentation binaire non-signée du scalaire *k* allant de la droite vers la gauche.

Les points multiples calculés dans la q-ième itération font partie de l'ensemble de points suivants :

$$2^{(q-1)w+1}P, ..., 2^{(q-1)w+w-1}P, 2^{(q-1)w+w}P$$

La boucle prend fin après que chaque bit du scalaire k a été sélectionné dans une fenêtre.

Après la fin de la boucle, le processeur 2 retourne la valeur mémorisée dans le premier registre. Cette valeur est le résultat de la multiplication du point P par le scalaire k.

*Protection additionnelles dans le cas de fenêtres spécifiques*

Le processeur 2 met en oeuvre des traitements additionnels au cours de la boucle dans deux cas particuliers :

- lorsque tous les bits d'une fenêtre sélectionnée sont tous nuls, et
- lorsque tous les bits d'une fenêtre sélectionnée sont tous non nuls.

Comme cela a été développé en introduction, ces deux cas sont susceptibles de réduire l'effort nécessaire pour retrouver le scalaire k par observation de signaux sur le dispositif cryptographique ; ces traitements additionnels, détaillés ci-après, ont pour effet de protéger le dispositif cryptographique contre une telle réduction d'effort.

*Cas où tous les bits d'une fenêtre sont nuls*

Si tous les bits de la fenêtre sélectionnée au cours d'une itération courante de la boucle sont nuls, le processeur 2 exécute au cours de cette itération courante, et de manière factice, la fonction d'addition au moins une fois.

On considère qu'une exécution de la fonction d'addition est factice si le résultat de cette exécution n'est pas utilisé ultérieurement pour obtenir le résultat de la multiplication du point P par le scalaire k.

Par exemple, le résultat d'une exécution factice est mémorisé dans un troisième registre faisant office de « poubelle ». Le contenu de ce registre « poubelle » n'est ensuite pas utilisé. Alternativement, le processeur 2 ajoute la valeur « zéro » au contenu du premier registre à titre d'exécution factice.

Il est également envisageable de mettre en oeuvre au moins une opération factice même quand l'on n'est pas dans le cas spécifique d'une fenêtre dont tous les bits sont nuls.

Soit *n* le nombre d'opérations factices de la fonction d'addition mises en oeuvre au cours de l'itération courante, et *m* le nombre d'opérations « utiles » mises en oeuvre au cours de l'étape 106 d'ajout de l'itération courante.

La valeur *m* dépend des bits de la fenêtre sélectionnée au cours de l'itération courante. Par exemple, on a *m* = 0 dans le cas d'une fenêtre dont les bits sont tous nuls.

Avantageusement, la valeur de *n* pour est choisie de telle sorte que l'on a, pour chaque itération :

$$n + m \geq 1$$

Ceci permet d'améliorer la protection du procédé contre des attaques dites « différentielles ».

Par ailleurs, il peut être envisagé de limiter le nombre d'exécutions factices par itération de la manière suivante :

$$n + m \leq w$$

Le surplus de consommation de temps processeur induit par les opérations factices au cours de la boucle reste ainsi modéré. Par ailleurs, avec une telle contrainte, l'exécution du procédé est susceptible de générer une trace d'exécution correspondant à un traitement de w bits tous non nuls, ce qui peut contribuer à »cacher » les fenêtres de w bits du scalaire k dans lesquelles les bits sont véritablement tous non nuls.

Il peut en particulier être choisi que :

$$n + m < w$$

Avantageusement, le nombre d'exécutions factices *n* de la fonction d'addition est choisi de sorte que le nombre total d'exécutions *n + m* de la fonction d'addition soit identique pour plusieurs itérations de la boucle, voire identique à toutes les itérations de boucle (auquel cas *n + m* est tout simplement constant). Ceci rend encore plus difficile la détermination de k par observation de signaux.

En fixant le nombre total d'additions par itération à w par exemple, la séquence d'appels A, D susceptible d'être observée est la suivante :

*DDD AAA DDD AAA DDD AAA ...*

La probabilité d'observer la bonne addition est donc de 1/w. Il est à noter que la résistance aux observations simples (non différentielles) augmente aussi avec ce nombre.

En outre, pour des scalaires k qui ayant des tailles de de 224, 256, 384 et 521 bits respectivement et pour le cas « fenêtre tout à 0 », tous les choix de fenêtres de 1 à 5 donnent un NBP > $2^{100}$.

En effet, toujours en supposant que le nombre total d'additions par itération est fixé à w, on a :

$$NBP = (C_w^1)^{\frac{L}{w}}$$

Ce nombre est supérieur à la limite pour les recherches exhaustives faisables aujourd'hui.

*Cas où tous les bits de la fenêtre sont non-nuls*

Si tous les bits de la fenêtre sélectionnée au cours d'une itération courante sont non nuls, alors les points multiples ajoutés dans le premier registre au cours de l'étape 106 sont déterminés d'après la forme non-adjacente (NAF) associée à la fenêtre (et non d'après la fenêtre elle-même, qui est une portion de la représentation binaire non-signée du scalaire k).

Comme indiqué précédemment, la forme non-adjacente associée à une fenêtre constitué de w bits égaux à '1' comprend les w+1 bits signés suivants: un bit de poids le plus faible égal à -1, w-1 bits de poids intermédiaires nuls, puis un bit de poids le plus fort égal à 1.

Sont mémorisés dans des deuxièmes registres puis ajoutés dans le premier registre les points multiples suivants, l'itération courante étant la q-ième itération :

- un premier point multiple de valeur -$2^{(q-1)w}P$, qui est associé au bit de poids le plus faible égal à '-1' de la NAF associée à la fenêtre. Ce point multiple est typiquement calculé par calcul de l'opposé du point $2^{(q-1)w}P$ (le calcul de l'opposé d'un point de courbe elliptique est très facile : il suffit de prendre l'opposé d'une des coordonnées du point $2^{(q-1)w}P$ pour obtenir le point -$2^{(q-1)w}P$).
- un deuxième point multiple de valeur $2^{qw}P$, qui est associé au bit de poids le plus fort égal à '1' de la NAF associée à la fenêtre.

Ces deux points multiples sont ajoutés dans le premier registre au cours de la boucle.

L'ajout de ces deux points multiples déterminés d'après la forme NAF (en lieu et place de points multiples déterminés d'après la fenêtre sélectionnée dans la représentation binaire non-signée du scalaire k) permet d'augmenter le nombre *NBP* de possibilités à tester pour retrouver le scalaire k par observation de signaux.

Il peut être par exemple envisagé de mémoriser dans un deuxième registre puis d'ajouter le premier point multiple -$2^{(q-1)w}P$ pendant la q-ième itération.

La mémorisation et l'ajout du deuxième point multiple peut être reportée à l'itération suivante (la (q+1)-ième) à fins de simplification de codage de la boucle et afin d'éviter de devoir allouer un (w+1)-ième deuxième registre additionnel (la NAF de la fenêtre a une longueur en bits égale à w+1).

Dans le cas où l'itération courante q s'avère être la dernière itération de la boucle, ce point multiple est ajouté dans le premier registre après la sortie de la boucle.

*Exemple d'implémentation en Python*

Une implémentation possible du procédé de multiplication de P par k sous la forme d'une fonction codé en Python pour *w* = 3 en Python est exposée en **annexe 2,** à la fin de la présente description. Dans cette implémentation d'exemple,

* R est un tableau à deux entrées. Le premier registre est la première entrée R[0] de ce tableau, et le registre « poubelle » est la deuxième entrée R[1]de ce tableau.
* Les entrées du tableau buf forment les w deuxièmes registres.
* La fonction permute.perm sert à déterminer de façon aléatoire l'ordre dans lequel les additions dans le premier registre vont être effectuées par le processeur 2.
* La variable carry est une retenue positionnée à 1 au cours d'une itération courante dans le cas où tous les bits de la fenêtre sélectionnée au cours de l'itération courante sont non-nuls. Au cours de l'itération suivante, il est constaté que cette variable carry a été positionnée à 1. Si la fenêtre sélectionnée au cours de cette itération suivante comporte au moins un bit nul, le processeur 2 ajoute, au cours de l'itération suivante, le point multiple associé au bit de plus le plus fort de la NAF de la fenêtre sélectionnée au cours de l'itération courante est à ajouter dans le premier registre au cours de cette itération suivante. Si la fenêtre sélectionnée au cours de cette itération suivante ne comporte que des bits non nuls, l'ajout de ce point multiple est reporté à plus tard.
* Au cours de chaque itération de la boucle, est compté dans la variable index le nombre de points multiples à ajouter dans le premier registre au cours de l'itération.
* le contenu du registre d'entrée contenant P est écrasé au cours de la boucle par application de la fonction de doublement.

Pour traiter le scalaire k ayant comme représentation binaire non-signée 1000101111, quatre itérations sont mises en oeuvre par la fonction R2L_DoubleAndDelayedAdd_w3.

Le tableau ci-dessous détaille le fonctionnement de cette fonction au cours de ces quatre itérations, notamment le contenu des différentes variables utilisées.

| q | Fenêtre | Carry | carry mis à jour | Représentation binaire utilisée pour déterminer les points multiples à ajouter | index | buf | Evolution du contenu du registre d'entrée |
|---|---------|-------|------------------|-------------------------------------------------------------------------------|-------|-----|-------------------------------------------|
| 1 | 111 | 0 | 1 | $(0\ 0\text{-}1)_2$ | 1 | [-P, 0, 0] | P -> 2P, 4P, 8P |
| 2 | 101 | 1 | 0 | $(110)_2 = 101 + 1$ | 2 | [16P, 32P, 0] | 8P -> 16P, 32P, 64P |
| 3 | 000 | 0 | 0 | aucune, une addition factice | 1 | [64P, 0, 0] | 64P -> 128P, 256P, 512P |
| 4 | 001 | 1 | 0 | 1 | 1 | [512P, 0, 0] | 512P -> 1024P, 2048P, 4096P |

*Résultats comparatifs avec d'autres procédés connus*

Le tableau de synthèse ci-dessous compare le procédé proposé avec deux autres procédés connus :

* le procédé de Tunstall, décrit dans le document « Random Order m-ary Exponentiation », par M. Tunstall et publié en 2009, et
* le procédé de Moreno-Hasan mentionné en introduction.

Dans le tableau ci-dessous, n est la longueur en bits du scalaire k (dans sa représentation binaire non-signée), et *w* est la taille de fenêtre choisie.

|  | Tunstall | Moreno-Hasan | Procédé proposé |
|---|---|---|---|
| Mémoire | **w** | < n/2 | **w** |
| Résistance contre attaques SPA | Partielle | **Oui** | **Oui** |
| Résistance contre attaques DPA | haute | lié à w | **ajustable** |
| Nombre de copies mémoires | **0** | n | **0** |
| Cas extrêmes non-traitables ? | **Non** | Oui | **Non** |
| Surcoût en performance par rapport à un algorithme « double-and-add » classique | **0** | **0** | Pire cas : n/w additions En moyenne : **0** |
| Autres Inconvénients | Sécurité assurée uniquement avec l'utilisation de formules unifiées | Demande trop de mémoire pour une implémentation carte à puce | |

**Annexe 1** - implémentation classique d'un algorithme de multiplication d'un point de courbe elliptique par un scalaire du type « double-et-ajoute »

```
R2L_DoubleAndAdd(k,P) :
 t = k
 R0 = 0
 R1 = P
 while (t>0):
      if (t&1):
           R0 = R0 + R1
      R1 = 2*R1
      t >>= 1 // passage au bit suivant du scalaire k

 return R0
```

**Annexe 2** - implémentation en Python d'un algorithme de multiplication d'un point de courbe elliptique par un scalaire du type « double-et-ajoute », selon un mode de réalisation de l'invention

```
def R2L_DoubleAndDelayedAdd_w3 (k,P):
  R = [0,0] # R[0] contient le 'vrai' résultat, R[1] sert
  de registre-poubelle pour des exécutions factices
  buf = [0,0,0] # buffer d'accumulation de points
  carry = 0

  while k:
        d = k & 0x7
        d += carry
        if ((d & 0x7) == 0x7): # tout à un
            carry = 1
            bits = [-1,0,0]
            dst = [0]
        elif ((d & 0x7) == 0): # tout à zéro
            carry = d>>3
            bits = [1,0,0]
            dst = [1] # registre de destination est le registre-
            poubelle
        else:
            carry = 0
            bits = [d & 1, (d>>1) & 1, (d>>2) & 1]
            dst = [0,0,0]

        index = 0
        for i in [0,1,2]:
            if bits[i]:
                buf[index] = bits[i]*P # -P or +P
                index += 1
            else:
                R[1] = 1*P
                index += 0
            P = 2*P

        k >>= 3

        table = permute.perm(index) # choisir une permutation
        sur le nombre d'éléments non-nuls
        for i in table:
            R[dst[i]] = R[0]+buf[i]

  if carry:
        R[0] += P

  return R[0]
```

## Revendications

1.  Procédé de traitement cryptographique mis en oeuvre par au moins un processeur (2), le procédé comprenant une multiplication d'un point $P$ d'une courbe elliptique sur un corps de Galois par un scalaire $k$, la multiplication comprenant des étapes de :

    • mémorisation (100) dans un premier registre d'un point nul du corps de Galois,
    • mise en oeuvre d'une boucle comprenant au moins une itération, une itération de la boucle comprenant des étapes de :

       ∘ sélection (102) d'une fenêtre de $w$ bits dans la représentation binaire non-signée du scalaire $k$, $w$ étant un entier prédéterminé indépendant du scalaire $k$ et strictement supérieur à 1,
       ∘ calcul (104) au moyen d'une fonction de doublement et mémorisation dans au plus $w$ deuxièmes registres de points multiples de P, chaque point multiple étant associé à un bit de la fenêtre et étant de la forme $\pm2^iP$

où $i$ est un entier,
○ ajout ou non (106) dans le premier registre de points multiples mémorisés dans les deuxièmes registre au moyen d'une fonction d'addition, chaque point multiple étant ajouté ou non dans le premier registre ou non en fonction de la valeur du bit de la fenêtre auquel le point multiple est associé,

dans lequel la boucle prend fin une fois que chaque bit de la représentation binaire non-signée du scalaire $k$ a été sélectionné dans une itération,
• après la fin de la boucle, fourniture (108) d'une valeur mémorisée dans le premier registre,

le procédé étant **caractérisé en ce que** :

• si tous les bits de la fenêtre sélectionnée (102) au cours d'une itération de la boucle sont nuls, l'itération comprend au moins une exécution factice (106) de la fonction d'addition, et/ou
• si tous les bits de la fenêtre sélectionnée au cours d'une itération de la boucle sont non nuls, les points multiples à ajouter dans le premier registre au cours de l'étape (104) sont déterminés d'après une forme non-adjacente associée à la fenêtre.

2. Procédé selon la revendication précédente, dans lequel on a pour chaque itération de la boucle, $n + m \geq 1$, où $n$ est le nombre d'exécutions factices éventuelles de la fonction d'addition au cours de l'itération, et $m$ est le nombre d'exécutions éventuelles de la fonction d'addition au cours de l'étape d'ajout (106) de l'itération.

3. Procédé selon la revendication précédente, dans lequel $n + m$ est identique pour plusieurs itérations de la boucle, voire pour toutes les itérations de la boucle.

4. Procédé selon l'une des revendications précédentes, dans lequel les fenêtres sont sélectionnées selon un ordre de lecture de la représentation binaire du scalaire $k$ allant de la droite vers la gauche.

5. Procédé selon l'une des revendications précédentes, dans lequel, si plusieurs bits de la fenêtre sélectionnée au cours d'une itération de la boucle sont non nuls, alors les ajouts de multiples dans le premier registre sont mises en oeuvre au cours de l'itération dans un ordre aléatoire.

6. Procédé selon l'une des revendications précédentes, dans lequel, si tous les bits de la fenêtre sélectionnée au cours d'une itération de la boucle sont non nuls, un point multiple de valeur négative associé au bit de poids le plus faible de ladite forme non-adjacente est ajouté dans le premier registre au cours de l'itération.

7. Procédé selon l'une des revendications précédentes, dans lequel, si tous les bits de la fenêtre sélectionnée au cours d'une itération de la boucle sont non nuls, un point multiple associé au bit de poids le plus fort de ladite forme non-adjacente est ajouté dans le premier registre dans une itération ultérieure ou après la fin de la boucle.

8. Procédé selon l'une des revendications précédentes, dans lequel, si tous les bits de la fenêtre sélectionnée au cours de la q-ième itération de la boucle sont non nuls, un point multiple de valeur $2^{qw}P$ est ajouté dans le premier registre au cours de la q-ième itération.

9. Produit programme d'ordinateur comprenant des instructions de code de programme pour l'exécution des étapes du procédé de traitement cryptographique selon l'une des revendications précédentes, lorsque ce procédé est exécuté par au moins un processeur (2).

10. Dispositif de traitement cryptographique (1) comprenant

○ au moins un processeur (2) configuré pour multiplier un point $P$ d'une courbe elliptique sur un corps de Galois par un scalaire $k$,
○ au moins une mémoire (4, 6) comprenant un premier registre et $w$ deuxièmes registres,

dans lequel la multiplication comprenant des étapes de :

• mémorisation (100) dans le premier registre d'un point nul du corps de Galois,
• mise en oeuvre d'une boucle comprenant au moins une itération, une itération de la boucle comprenant des étapes de :

∘ sélection (102) d'une fenêtre de *w* bits dans la représentation binaire non-signée du scalaire *k, w* étant un entier prédéterminé indépendant du scalaire *k* et strictement supérieur à 1,

∘ calcul (104), au moyen d'une fonction de doublement, et mémorisation, dans au plus *w* des deuxièmes registres, de points multiples de P, chaque point multiple étant associé à un bit de la fenêtre et étant de la forme $\pm 2^i P$ où *i* est un entier,

∘ ajout ou non (106) dans le premier registre de points multiples mémorisés dans les deuxièmes registre au moyen d'une fonction d'addition, chaque point multiple étant ajouté ou non dans le premier registre ou non en fonction de la valeur du bit de la fenêtre auquel le point multiple est associé,

dans lequel la boucle prend fin une fois que chaque bit de la représentation binaire non-signée du scalaire *k* a été sélectionné dans une itération,

• après la fin de la boucle, fourniture d'une valeur mémorisée dans le premier registre,

le dispositif étant **caractérisé en ce que** le processeur (2) est configuré de sorte que :

• si tous les bits de la fenêtre sélectionnée (102) au cours d'une itération de la boucle sont nuls, l'itération comprend au moins une exécution factice (106) de la fonction d'addition, et/ou

• si tous les bits de la fenêtre sélectionnée au cours d'une itération de la boucle sont non nuls, les points multiples à ajouter dans le premier registre au cours de l'étape (104) sont déterminés d'après une forme non-adjacente associée à la fenêtre.

**11.** Carte à puce (8) comprenant un dispositif de traitement cryptographique (1) selon la revendication précédente.

**Patentansprüche**

**1.** Verfahren zur kryptografischen Verarbeitung, das durch mindestens einen Prozessor (2) ausgeführt wird, wobei das Verfahren eine Multiplikation eines Punkts *P* einer elliptischen Kurve auf einem Galois-Körper durch einen Skalar *k* umfasst, wobei die Multiplikation die folgenden Schritte umfasst:

• Speichern (100) in einem ersten Register eines Nullpunkts des Galois-Körpers,

• Ausführen einer Schleife, mindestens eine Iteration umfassend, wobei eine Iteration der Schleife die folgenden Schritte umfasst:

∘ Auswählen (102) eines Fensters mit *w* Bits in der nicht signierten Binärdarstellung des Skalars *k,* wobei *w* eine vorbestimmte Ganzzahl unabhängig von dem Skalar *k* und streng größer als 1 ist,

∘ Berechnen (104) anhand einer Verdoppelungs- und Speicherungsfunktion in höchstens *w* zweiten Registern von Punkten, die Vielfache von P sind, wobei jeder vielfache Punkt einem Bit des Fensters zugeordnet wird und in der Form $\pm 2^i P$ ist, wobei *i* eine Ganzzahl ist,

∘ Hinzufügen oder nicht (106) in das erste Register von in dem zweiten Register gespeicherten vielfachen Punkten anhand einer Additionsfunktion, wobei jeder vielfache Punkt in Abhängigkeit von dem Wert des Bits des Fensters, dem der vielfache Punkt zugeordnet ist, in das erste Register oder nicht hinzugefügt wird oder nicht,

wobei die Schleife endet, sobald jedes Bit der nicht signierten Binärdarstellung des Skalars k in einer Iteration ausgewählt worden ist,

• nach dem Ende der Schleife Bereitstellen (108) eines in dem ersten Register gespeicherten Wertes,

wobei das Verfahren **dadurch gekennzeichnet ist, dass**:

• wenn alle Bits des ausgewählten Fensters (102) im Laufe einer Iteration der Schleife Null sind, die Iteration mindestens eine unechte Ausführung (106) der Additionsfunktion umfasst, und/oder

• wenn alle Bits des ausgewählten Fensters im Laufe einer Iteration der Schleife nicht Null sind, die im Laufe des Schrittes (104) in das erste Register hinzuzufügenden vielfachen Punkte entsprechend einer nicht angrenzenden, dem Fenster zugeordneten Norm bestimmt werden.

**2.** Verfahren nach dem vorstehenden Anspruch, wobei für jede Iteration der Schleife *n* + *m* ≥ 1 gilt, wobei *n* die Anzahl an eventuellen unechten Ausführungen der Additionsfunktion ist, und *m* die Anzahl eventueller Ausführungen der Additionsfunktion im Laufe des Schrittes des Hinzufügens (106) der Iteration ist.

3. Verfahren nach dem vorstehenden Anspruch, wobei $n + m$ für mehrere Iterationen der Schleife, oder gar für alle Iterationen der Schleife identisch ist.

4. Verfahren nach einem der vorstehenden Ansprüche, wobei die Fenster entsprechend einer Lesereihenfolge der Binärdarstellung des Skalars $k$ ausgewählt werden, die von rechts nach links verläuft.

5. Verfahren nach einem der vorstehenden Ansprüche, wobei, wenn mehrere Bits des im Laufe einer Iteration der Schleife ausgewählten Fensters nicht Null sind, die Hinzufügungen von Vielfachen in das erste Register im Laufe der Iteration in einer zufälligen Reihenfolge ausgeführt werden.

6. Verfahren nach einem der vorstehenden Ansprüche, wobei, wenn alle Bits des im Laufe einer Iteration der Schleife ausgewählten Fensters nicht Null sind, ein vielfacher Punkt eines negativen Wertes, der dem schwächsten Gewichtsbit der nicht angrenzenden Form zugeordnet ist, im Laufe der Iteration in das erste Register hinzugefügt wird.

7. Verfahren nach einem der vorstehenden Ansprüche, wobei, wenn alle Bits des im Laufe einer Iteration der Schleife ausgewählten Fensters nicht Null sind, ein vielfacher Punkt, der dem stärksten Gewichtsbit der nicht angrenzenden Form zugeordnet ist, in einer späteren Iteration oder nach dem Ende der Schleife in das erste Register hinzugefügt wird.

8. Verfahren nach einem der vorstehenden Ansprüche, wobei, wenn alle Bits des im Laufe der q. Iteration der Schleife ausgewählten Fensters nicht Null sind, ein vielfacher Punkt des Werts $2^{qw}P$ im Laufe der q. Iteration in das erste Register hinzugefügt wird.

9. Computerprogrammprodukt, umfassend Programmcodebefehle zum Ausführen der Schritte des Verfahrens zur kryptografischen Verarbeitung nach einem der vorstehenden Ansprüche, wenn das Verfahren durch mindestens einen Prozessor (2) ausgeführt wird.

10. Vorrichtung zur kryptografischen Verarbeitung (1), umfassend

   ◦ mindestens einen Prozessor (2), konfiguriert zum Multiplizieren eines Punktes $P$ einer elliptischen Kurve auf einem Galois-Körper mit einem Skalar $k$,
   ◦ mindestens einen Speicher (4, 6), umfassend ein erstes Register und w zweite Register,

   wobei die Multiplikation die folgenden Schritte umfasst:

   • Speichern (100) in dem ersten Register eines Nullpunkts des Galois-Körpers,
   • Ausführen einer Schleife, mindestens eine Iteration umfassend, wobei eine Iteration der Schleife die folgenden Schritte umfasst:

   ◦ Auswählen (102) eines Fensters mit $w$ Bits in der nicht signierten Binärdarstellung des Skalars $k$, wobei $w$ eine vorbestimmte Ganzzahl unabhängig von dem Skalar $k$ und streng größer als 1 ist,
   ◦ Berechnen (104) anhand einer Verdoppelungs- und Speicherungsfunktion in höchstens $w$ der zweiten Register von Punkten, die Vielfache von P sind, wobei jeder vielfache Punkt einem Bit des Fensters zugeordnet wird und in der Form $\pm 2^{i}P$ ist, wobei $i$ eine Ganzzahl ist,
   ◦ Hinzufügen oder nicht (106) in das erste Register von in den zweiten Registern gespeicherten vielfachen Punkten anhand einer Additionsfunktion, wobei jeder vielfache Punkt in Abhängigkeit von dem Wert des Bits des Fensters, dem der vielfache Punkt zugeordnet ist, in das erste Register oder nicht hinzugefügt wird oder nicht,

   wobei die Schleife endet, sobald jedes Bit der nicht signierten Binärdarstellung des Skalars $k$ in einer Iteration ausgewählt worden ist,
   • nach dem Ende der Schleife Bereitstellen eines in dem ersten Register gespeicherten Wertes,

   wobei die Vorrichtung **dadurch gekennzeichnet ist, dass** der Prozessor (2) derart konfiguriert ist, dass:

   • wenn alle Bits des ausgewählten Fensters (102) im Laufe einer Iteration der Schleife Null sind, die Iteration mindestens eine unechte Ausführung (106) der Additionsfunktion umfasst, und/oder

• wenn alle Bits des ausgewählten Fensters im Laufe einer Iteration der Schleife nicht Null sind, die im Laufe des Schrittes (104) in das erste Register hinzuzufügenden vielfachen Punkte entsprechend einer nicht angrenzenden, dem Fenster zugeordneten Form bestimmt werden.

11. Chip-Karte (8), umfassend eine Vorrichtung zur kryptografischen Verarbeitung (1) nach dem vorstehenden Anspruch.

**Claims**

1. A cryptographic processing method executed by at least one processor (2), the method comprising a multiplication of a point $P$ of an elliptic curve on a Galois field by a scalar $k,$ wherein the multiplication comprises the steps of:

   • storing (100) a zero point of the Galois field in a first register,
   • executing a loop comprising at least one iteration, wherein one iteration of the loop comprises steps of:

      ○ selecting (102) a window of $w$ bits in a non-signed binary representation of the scalar $k,$ wherein $w$ is a predetermined integer independent of the scalar $k$ and is strictly greater than 1,
      ○ calculating (104), by means of a doubling function, and storing, in at most $w$ second registers, multiple points of P, wherein each multiple point is associated with a bit of the window and is of form $\pm2^iP$ where $i$ is an integer,
      ○ adding or not (106), in the first register, multiple points stored in the second register by means of an addition function, wherein each multiple point is added or not in the first register depending of the value of the bit of the window with which the multiple point is associated,

   wherein the loop ends once each bit of the non-signed binary representation of the scalar $k$ has been selected in an iteration,
   • after the end of the loop, returning (108) a value stored in the first register,

   the method being **characterized in that**:

      • if all the bits of the window selected (102) during an iteration of the loop are zero, the iteration comprises at least one dummy execution (106) of the addition function, and/or
      • if all the bits of the window selected during an iteration of the loop are non-zero, the multiple points to be added in the first register during the step (104) are determined from a non-adjacent form associated with the window.

2. The method according to the preceding claim, wherein for each iteration of the loop, there is $n + m \geq 1$, where $n$ is the number of any dummy executions of the addition function during the iteration, and $m$ is the number of any executions of the addition function during the addition step (106) of the iteration.

3. The method according to the preceding claim, wherein $n + m$ is identical for several iterations of the loop, or even for all the iterations of the loop.

4. The method according to any of the preceding claims, wherein the windows are selected according to order of reading of the binary representation of the scalar $k$ going from right to left.

5. The method according to any of the preceding claims, wherein, if several bits of the window selected during an iteration of the loop are non-zero, then multiples are added in the first register during the iteration in random order.

6. The method according to any of the preceding claims, wherein, if all the bits of the window selected during an iteration of the loop are non-zero, a multiple point of negative value associated with a least significant bit of said non-adjacent form is added in the first register during the iteration.

7. The method according to any of the preceding claims, wherein, if all the bits of the window selected during an iteration of the loop are non-zero, a multiple point associated with a most significant bit of said non-adjacent form is added in the first register in a later iteration or after the end of the loop.

8.  The method according to any of the preceding claims, wherein, if all the bits of the window selected during the q-th iteration of the loop are non-zero, a multiple point of value $2^{qw}P$ is added in the first register during the q-th iteration.

9.  A computer program product comprising program code instructions for executing the steps of the cryptographic processing method, according to any of the preceding claims, when this method is executed by at least one processor (2).

10. A cryptographic processing device (1) comprising

    ◦ at least one processor (2) configured to multiply a point $P$ of an elliptic curve on a Galois field by a scalar $k$,
    ◦ at least one memory (4, 6) comprising a first register and $w$ second registers,

    wherein the multiplication comprises steps of:

    • storing (100) a zero point of the Galois field in the first register,
    • executing a loop comprising at least one iteration, wherein one iteration of the loop comprises steps of:

        ◦ selecting (102) a window of $w$ bits in a non-signed binary representation of the scalar $k$, wherein $w$ is a predetermined integer independent of the scalar $k$ and strictly greater than 1,
        ◦ calculation (104), by means of a doubling function, and storage, in at most $w$ of the second registers, of multiple points of P, each multiple point being associated with a bit of the window and being of the form $\pm 2^{i}P$ where $i$ is an integer,
        ◦ addition or not (106) in the first register of multiple points stored in the second register by means of an addition function, each multiple point being added or not in the first register or not as a function of the value of the bit of the window with which the multiple point is associated,

    wherein the loop ends once each bit of the non-signed binary representation of the scalar k has been selected in an iteration,
    • after the end of the loop, returning a value stored in the first register,

    the device being **characterized in that** the processor (2) is configured such that:

        • if all the bits of the window selected (102) during an iteration of the loop are zero, the iteration comprises at least one dummy execution (106) of the addition function, and/or
        • if all the bits of the window selected during an iteration of the loop are non-zero, the multiple points to be added in the first register during the step (104) are determined from a non-adjacent form associated with the window.

11. A smart card (8) comprising a cryptographic processing device (1), according to the preceding claim.

**FIG. 1**

k, P

Mise à zéro d'un premier registre — 100

Sélection d'une fenêtre de bits du scalaire k — 102

Calcul avec fonction de doublement et mémorisation dans des deuxièmes registres de points multiples du point P — 104

Ajout de points multiples dans le premier registre avec fonction d'addition — 106

Au moins une exécution factice de la fonction d'addition — 106

Tant qu'il reste des bits de k à sélectionner

Fourniture du contenu du premier registre — 108

kP

# FIG. 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2014111647 A
- US 2014177827 A
- US 2014177824 A